# EUROPÄISCHE PATENTANMELDUNG

(11) **EP 1 120 093 A2**
(43) Veröffentlichungstag der Anmeldung: **01.08.2001**
(21) Anmeldenummer: 01890022.5
(22) Anmeldetag: 26.01.2001
(51) Int. Cl.: A61C 8/00

(54) **Kieferimplantat und Positionierungsvorrichtung zur Anbringung eines Arretierelementes im Implantat**

(30) Priorität: 27.01.2000 AT 1212000
(71) Anmelder: Haas, Robert, 3400 Klosterneuburg (AT); Watzek, Georg, Dr., 1080 Wien (AT)
(72) Erfinder: Haas, Robert, 3400 Klosterneuburg (AT); Watzek, Georg, Dr., 1080 Wien (AT)
(74) Vertreter: Kliment, Peter

(57) **Zusammenfassung**

Kieferimplantat (1) zum Implantieren in ein Ober- oder Unterkiefer (2). Um ein Kieferimplantat (1) mit dem umgebenden Kieferknochen (2) temporär zu fixieren, ist vorgesehen, daß im Schaft des Kieferimplantats (1) vorzugsweise in der dem Kopf (6) des Kieferimplantats (1) gegenüberliegenden Hälfte des Schafts eine Bohrung (3) quer zur Rotationsachse (4) des Kieferimplantats (1) angeordnet ist, in die ein Arretierelement steckbar ist.

## Beschreibung

Die vorliegende Erfindung bezieht sich auf ein Kieferimplantat gemäß Oberbegriff des Anspruchs 1 sowie auf eine Positioniervorrichtung zur Anbringung eines Arretierelementes in einem Kieferimplantat gemäß Oberbegriff des Anspruchs 9.

Wird ein ausgefallener Zahn im menschlichen Kiefer nicht ersetzt, bildet sich in der entstandenen Zahnlücke der Kieferknochen zurück, wodurch ein sogenannter Substanzdefekt im Kiefer entsteht. Soll bei einem solchen, bereits vorhandenen Knochendefizit ein Zahnersatz geschaffen werden, so kann auf Wunsch des Patienten ein Kieferimplantat in das menschliche Kiefer (Ober- oder Unterkiefer) implantiert werden.

Solche Kieferimplantate sind meistens rotationssymmetrische im wesentlichen zylindrische Elemente, die aus einem Kopfteil und einem Schaftteil bestehen. Der Schaftteil weist dabei wahlweise ein Außengewinde auf, wodurch das Kieferimplantat leichter im Kiefer versenkt werden kann.

Das Kieferimplantat weist weiters ein in Richtung der Rotationsachse des Schaftteils ausgerichtetes Sackloch auf, welches in den meisten Fällen mit einem Gewinde versehen ist. In dieses Sackloch wird später, nachdem das Kieferimplantat mit dem umgebenden Kieferknochen verwachsen ist, der eigentliche Zahnersatz eingeschraubt.

Für die schnelle und korrekte Verheilung der Wunde bzw. für das korrekte Zusammenwachsen des Kieferimplantats mit dem umgebenden Kieferknochen ist es erforderlich, daß das Kieferimplantat absolut starr im Kieferknochen gelagert wird. Eine Drehung des Kieferimplantats im Kieferknochen oder eine Verschiebung bewirkt einen längeren Heilungsprozeß und ein eventuelles Schiefstellen des Kieferimplantats im Kieferknochen.

Ziel der vorliegenden Erfindung ist es, ein Kieferimplantat vorzusehen, welches mittels eines entsprechenden Arretierelements im Kieferknochen fixiert werden kann, sowie eine Positioniervorrichtung zur zielgenauen Einbringung des Arretierelements im Kieferimplantat durch den Kieferknochen.

Erfindungsgemäß wird dies durch die kennzeichnenden Merkmale des Anspruchs 1 erreicht.

Dadurch kann ein Arretierelement durch den Kieferknochen und in weiterer Folge in das Kieferimplantat gesteckt werden. Ein Verdrehen bzw. Verrutschen des Kieferimplantats ist somit nicht mehr möglich.

Durch das Merkmal des Anspruchs 2 kann das Arretierelement durch das Kieferimplantat durchgesteckt werden und sich auch an der gegenüberliegenden Seite des Kieferimplantats am umgebenden Kieferknochen abstützen.

Das Merkmal des Anspruchs 3 ermöglicht eine Verschraubung des Kieferimplantats mit dem umgebenden Kieferknochen.

Durch das Merkmal des Anspruchs 4 kann eine Positioniervorrichtung am Kieferimplantat ausgerichtet werden, die es ermöglicht das Arretierelement durch den Kieferknochen in die Bohrung im Kieferimplantat einzuführen bzw. einzuschrauben. Da das Kieferimplantat vorerst vollkommen vom Kieferknochen umgeben ist, muß erst jene Stelle im Kieferknochen gefunden werden, hinter der sich die Bohrung im Kieferimplantat befindet, sodaß der Kieferknochen in der gedachten Verlängerung der Bohrung aufgebohrt werden kann und das Arretierelement durch diese Öffnung im Kieferknochen in die Bohrung im Kieferimplantat geschoben werden kann.

Als Positionierhilfen für die Positioniervorrichtung sind dabei unterschiedliche Elemente gemäß den Kennzeichen der Ansprüche 5-7 denkbar. Prinzipiell sind jedoch auch andere Positionierhilfen, welche das lagemäßige Ausrichten zweier Gegenstände zueinander ermöglichen, denkbar.

Gemäß dem Kennzeichen des Anspruchs 8 kann die Arretierung entweder durch einen Stift oder durch eine Schraube erfolgen.

Das kennzeichnende Merkmal des Anspruchs 9 ermöglicht das Auffinden der Bohrung im Kieferimplantat obwohl dieses bereits im Kieferknochen versenkt ist. Durch diesen Umstand ist die Bohrung eigentlich von außen nicht sichtbar. Durch die Positionierungshilfe wird jedoch eine Positioniervorrichtung samt Führungsvorrichtung genau so ausgerichtet, daß die Führungsvorrichtung praktisch die Verlängerung der Bohrung des Kieferimplantats jedoch außerhalb des Kieferknochens bildet. Dadurch kann der Kieferknochen exakt durchbohrt werden und das Arretierelement durch den Kieferknochen in bzw. durch das Kieferimplantat gesteckt werden, je nachdem ob die Bohrung im Kieferimplantat durchgehend ist oder nicht.

Das Merkmal des Anspruchs 10 beschreibt eine bevorzugte Ausführungsform des Positionierungsarms.

Durch das Merkmal des Anspruchs 11 kann der Positionierungsarm auf einfache Art und Weise am Kieferimplantat befestigt werden. Dabei wird jenes Innengewinde im Kieferimplantat verwendet, an dem später der eigentliche Zahnersatz befestigt wird.

Durch das Merkmal des Anspruchs 12 kann der Positionierungsarm nachdem er mittels Positionierungshilfe ausgerichtet wurde, in Richtung des Langloches verschoben werden. Dadurch kann die Führungsvorrichtung näher an den Kieferknochen heranbewegt werden.

Durch das Merkmal des Anspruchs 13 kann der Positionierungsarm am Kieferimplantat eingerastet werden, wodurch eine exakte Ausrichtung der Führungsvorrichtung 9 mit der Bohrung im Kieferimplantat erreicht wird.

Im folgenden erfolgt nun eine detaillierte Beschreibung des erfindungsgemäßen Kieferimplantats. Dabei zeigt
- Fig. 1: eine schematische Schnittansicht eines erfindungsgemäßen Kieferimplantats samt Positioniervorrichtung
- Fig. 2: eine Draufsicht auf ein erfindungsgemäßes Kieferimplantat samt montierter Positioniervorrichtung und Positionierhilfe (Nut, Anschlag)
- Fig. 3: eine Draufsicht auf ein erfindungsgemäßes Kieferimplantat anderer Ausführung samt montierter Positioniervorrichtung und Positionierhilfe (Stanzung)

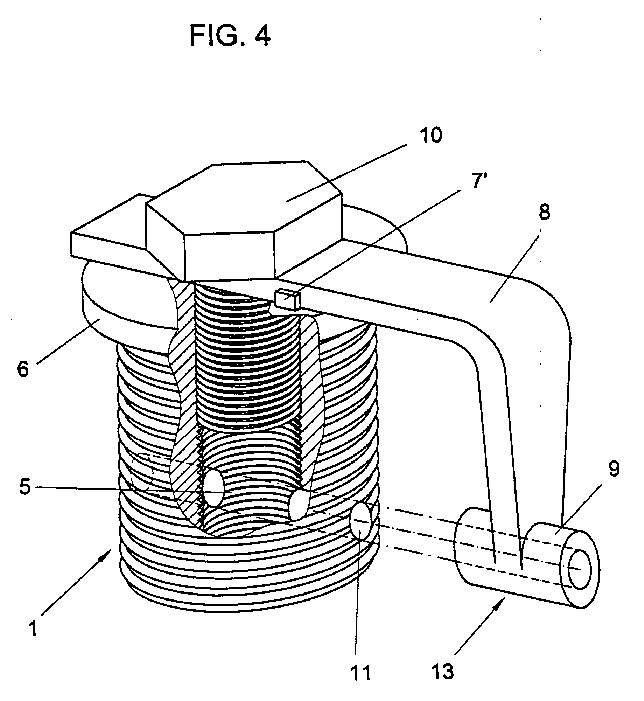

- Fig. 4: einen Schrägriß eines erfindungsgemäßen Kieferimplantats samt Positioniervorrichtung und Positionierhilfe

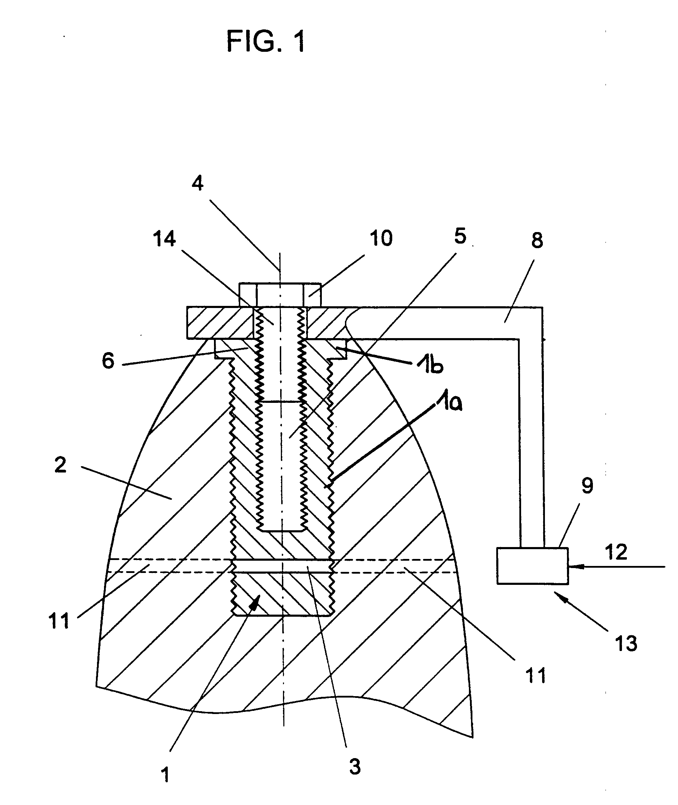

In Fig. 1 ist ein erfindungsgemäßes Kieferimplantat 1 mit Schaftteil 1a mit Innengewinde 5 und Kopfteil 1b im Kieferknochen 2 versenkt. Der Kopfteil ist im vorliegenden Ausführungsbeispiel plan ausgeführt. Es ist jedoch auch möglich, den Kopfteil an der Oberseite mit einem sechskantförmigem Aufsatz (nicht gezeichnet) auszubilden. Das Kieferimplantat 1 weist dabei die mindestens eine erfindungsgemäße Bohrung 3 auf, welche quer zur Längsachse 4 des Kieferimplantats im unteren Bereich des Schaftteils la angeordnet ist. Der Schaftteil la des Kieferimplantats kann dabei weiters je nach Ausführungsart mit einem Aussengwinde versehen sein oder nicht. Die Anzahl der erfindungsgemäßen Bohrungen richtet sich nach den Gegebenheiten im Kieferknochen und der erforderlichen Stabilität der Arretierung des Kieferimplantats.

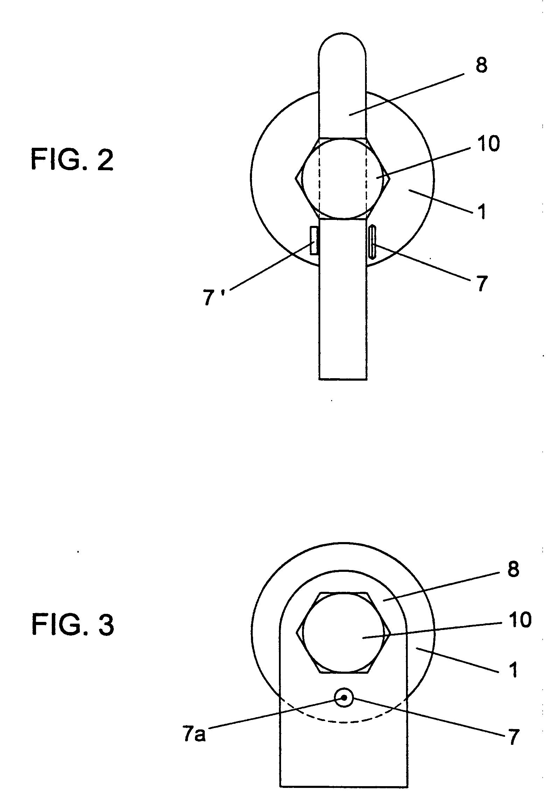

Das Kieferimplantat 1 und somit die erfindungsgemäße Bohrung 3 ist zur Gänze vom Kieferknochen 2 umgeben. Das Kieferimplantat 1 weist im Stirnbereich des Kopfteils 6 eine Positionierungshilfe 7,7',7a (Fig. 2,3) auf, welche so angeordnet ist, daß bei Ausrichtung eines Positionierungsarms 8 mit dieser Positionierungshilfe 7, eine Führungsvorrichtung 9, vorzugsweise eine Hülse, welche am freien Ende des Positionierungsarms 8 angeordnet ist, in der gedachten Verlängerung der erfindungsgemäßen Bohrung 3 des Kieferimplantats 1 positioniert ist.

Der Positionierungsarm 8 ist dabei am Kopfteil 6 des Kieferimplantats 1 befestigt, beispielsweise mittels einer Schraube 10, welche in das Innengewinde 5 eingeschraubt ist. Dazu weist der Positionierungsarm 8 eine Öffnung auf, durch welche die Schraube 10 durchsteckbar ist. Die Öffnung kann auch als Langloch ausgebildet sein. Dadurch kann nach erfolgter radialer Ausrichtung des Positionierungsarms, dieser noch entlang des Langlochs verschoben werden, so daß die Führungsvorrichtung 13 näher an den Kieferknochen heranbewegt werden kann. Es ist jedoch auch denkbar, daß am Positionierungsarm 8 als solches bereits ein ein Gewinde aufweisender stiftartiger Fortsatz angeordnet ist, welcher in das Innengewinde 5 eingeschraubt wird. Für den Fall, daß das Kieferimplantat kein Innengewinde 5 sondern lediglich eine Bohrung aufweist, in welche später der Zahnersatz gesteckt wird, so kann der Positionierungsarm auch mittels Steckverbindung in dieser Bohrung des Kieferimplantats 1 fixiert werden.

Durch die positionierte Führungsvorrichtung 9 kann nunmehr der Kieferknochen 2 in Richtung des Pfeiles 12 durchbohrt werden, so daß in weiterer Folge durch das so entstandene Loch 11 im Kieferknochen ein Arretierelement in den Kieferknochen 2 und das Kieferimplantat 1 eingeschoben bzw. eingeschraubt, je nach Art des Arretierungselementes, werden kann.

Es ist auch denkbar auf diese Art und Weise den Kieferknochen 2 und das Kieferimplantat 1 zu durchbohren ohne vorher eine Bohrung im Kieferimplantat 1 angefertigt zu haben. Auch in diesem Fall kann das Arretierungselement problemlos in die so entstehende durchgehende Bohrung zur Arretierung eingeschoben werden.

Die Art der Ausbildung der erfindungsgemäßen Bohrung 3 bestimmt die Einschieb- bzw. Einschraubtiefe des Arretierungselementes. Die Bohrung 3 kann dabei sowohl das gesamte Kieferimplantat 1 (den gesamten Durchmesser) durchdringen als auch lediglich als Sackloch (Durchdringung nur eines Wandteiles des Schaftteils 1b des Kieferimplantats 1) ausgeführt sein.

Durch das Arretierelement ist das Kieferimplantat 1 fix im Kieferknochen 2 befestigt. Eine Drehung oder Verschiebung des Kieferimplantats 1 ist nicht mehr möglich.

Nach Einbringen des Arretierelements in die erfindungsgemäße Bohrung 3 kann der Positionierungsarm 8 wieder vom Kieferimplantat 1 durch Lösen der Schraube 10 abgenommen werden.

Die Figuren 2 und 3 zeigen jeweils eine Draufsicht auf ein erfindungsgemäßes Kieferimplantat 1 samt montiertem Positionierungsarm 8. Sehr deutlich sind die Positionierhilfen 7,7',7a an der Stirnfläche des Kopfteiles 6 des Kieferimplantats 1 zu erkennen, welche einerseits als Nut 7 oder Anschlag 7' ausgeführt ist (Fig. 2) und andererseits als Stanzung 7 (Fig. 3). Im Falle der Ausbildung eines sechskantförmigen Aufsatzes auf dem Kopfteil 6 können die Positionierhilfen natürlich auch an diesem Aufsatz angeordnet sein.

In ersterem Fall kann beispielsweise eine Kante des Positionierungsarms 8 entlang der Nut 7 ausgerichtet werden. Die Lage der Nut an der Stirnfläche des Kopfes 6 des Kieferimplantats 1 muß dabei so gewählt werden, daß bei Ausrichtung des entsprechenden Positionierungsarms entlang dieser Nut, die Führungsvorrichtung 9 die gedachte Verlängerung der erfindungsgemäßen Bohrung 3 im Kieferimplantat 1 bildet.

Anstelle der Nut kann beispielsweise auch ein Anschlag 7' verwendet werden, der ein Weiterdrehen des Positionierungsarms über die gewünschte Position hinaus verhindert.

Im Fall der Stanzung 7 (Fig. 3) ist es erforderlich, daß an der dem Kieferimplantat 1 zugewandten Seite des Positionierungsarms 8 gegenüber der Stirnfläche des Kopfteiles 6 des Kieferimplantates 1 ein Fortsatz 7a angeordnet ist, welcher in die Stanzung 7 eingreifen kann und so durch Einrasten ein entsprechendes Ausrichten des Positionierungsarms 8 ermöglicht.

## Patentansprüche

1. Kieferimplantat (1) mit einem Schaftteil (1a) und einem Kopfteil (1b) zum Implantieren in ein Ober- oder Unterkiefer (2), dadurch gekennzeichnet, daß im Schaftteil (1a) des Kieferimplantats (1) vorzugsweise in der dem Kopfteil (6) des Kieferimplantats (1) gegenüberliegenden Hälfte des Schaftteils (1a) mindestens eine Bohrung (3) quer zur Rotationsachse (4) des Kieferimplantats (1) angeordnet ist, in die ein Arretierelement steckbar ist.

2. Kieferimplantat (1) nach Anspruch 1, dadurch gekennzeichnet, daß die Bohrung (3) durchgehend ist.

3. Kieferimplantat (1) nach Ansprüchen 1 und 2, dadurch gekennzeichnet, daß die Bohrung (3) ein Gewinde aufweist.

4. Kieferimplantat (1) nach einem der Ansprüche 1 bis 3, dadurch gekennzeichnet, daß an der Stirnfläche des Kopfteiles (6) bzw. an am Kopfteil wahlweise ausgebildeten Ausätzen des Kieferimplantats (1) eine Positionierhilfe (7,7') zur Ausrichtung einer Positioniervorrichtung (8), angeordnet ist, welche Positioniervorrichtung (8) das Einbringen des Arretierelements in die Bohrung (3) ermöglicht.

5. Kieferimplantat (1) nach einem der Ansprüche 1 bis 4, dadurch gekennzeichnet, daß die Positionierhilfe (7) eine Nut ist, an der eine Kante der Positioniervorrichtung (8) ausrichtbar ist.

6. Kieferimplantat (1) nach einem der Ansprüche 1 bis 4, dadurch gekennzeichnet, daß die Positionierhilfe (7') ein Anschlagelement ist, an welches die Positioniervorrichtung (8) in Anschlag bringbar ist.

7. Kieferimplantat (1) nach einem der Ansprüche 1 bis 4, dadurch gekennzeichnet, daß die Positionierhilfe (7) eine Stanzung ist, die mit einem entsprechenden Fortsatz (7a) an der Positioniervorrichtung (8) einrastbar ist.

8. Kieferimplantat (1) nach einem der vorhergehenden Ansprüche, dadurch gekennzeichnet, daß das Arretierelement ein Stift oder eine Schraube ist.

9. Positioniervorrichtung zur Anbringung eines Arretierelementes in einem im Ober- oder Unterkiefer implantierten Kieferimplantat (1), dadurch gekennzeichnet, daß ein geknickter oder gekrümmter Positionierungsarm (8) am Kopfteil (6) des Kieferimplantats (1) lösbar befestigt ist und dessen freies Ende (13) gegen den Kieferknochen (2) gerichtet ist, wobei am freien Ende (13) eine Führungsvorrichtung (9), vorzugsweise eine Hülse, angeordnet ist, durch die ein Bohrwerkzeug bzw. das Arretierelement durchsteckbar ist.

10. Vorrichtung nach Anspruch 9, dadurch gekennzeichnet, daß der Positionierungsarm (8) L-förmig ausgebildet ist.

11. Vorrichtung nach Ansprüchen 9 und 10, dadurch gekennzeichnet, daß ein Abschnitt des Positionierungsarms (8) eine Öffnung (14) aufweist, über welche der Positionierungsarm (8) mittels einer Schraube (10), die mit dem Kieferimplantat (1) verschraubt ist, am Kieferimplantat (1) fixiert ist.

12. Vorrichtung nach Ansprüchen 9 bis 11, dadurch gekennzeichnet, daß die Öffnung (14) ein Langloch ist.

13. Vorrichtung nach einem der Ansprüche 9 bis 12, dadurch gekennzeichnet, daß an der dem Kopfteil (6) des Kieferimplantats (1) zugewandten Seite des Positionierungsarms (8) ein Fortsatz (7a) angeordnet ist, der mit einer entsprechenden Stanzung (7) an der Stirnfläche des Kopfes (6) des Kieferimplantats (1) einrastbar ist.
